# EUROPÄISCHE PATENTSCHRIFT

(11) **EP 0 676 573 B1**
(45) Veröffentlichungstag und Bekanntmachung des Hinweises auf die Patenterteilung: **15.04.1998**
(21) Anmeldenummer: 95250027.0
(22) Anmeldetag: 03.02.1995
(51) Int. Cl.: F16K 27/00, F16H 27/00, F16K 27/04

(54) **Wegeventil in Grundplattenausführung**
Directional valve with a base-plate
Distributeur avec plaque de base

(30) Priorität: 06.04.1994 DE 4412247
(43) Veröffentlichungstag der Anmeldung: 11.10.1995
(73) Patentinhaber: MANNESMANN Aktiengesellschaft, 40213 Düsseldorf (DE)
(72) Erfinder: Liesenhoff, Thomas, D-30169 Hannover (DE); Hartig, Jens-Olaf, D-30655 Hannover (DE); Buschmann, Raimund, D-30455 Hannover (DE); Göttling, Diane, D-30161 Hannover (DE); Göttling, Helmut, D-30916 Isernhagen (DE); Möller, Rudolf, D-30989 Gehrden (DE); Müller, Peter, D-30457 Hannover (DE); Scharnowski, Gerhard, DE-30989 Gehrden (DE)
(74) Vertreter: Presting, Hans-Joachim, Dipl.-Ing.

(56) Entgegenhaltungen:
- EP-A- 0 606 048
- DE-B- 2 048 525
- DE-B- 2 166 935
- DE-U- 9 214 301

## Beschreibung

Die Erfindung betrifft ein Wegeventil in Grundplattenausführung mit einem Ventilkörper, in welchem mindestens ein zwischen Druckmittelanschlüssen schaltendes Ventilglied angeordnet ist, sowie mit einem Druckmittelanschlüsse enthaltenden Grundplattenelement, mit welchem der Ventilkörper mindestens mit einem Teil seiner Druckmittelanschlüsse in druckmittelschlüssigen Kontakt bringbar ist.

Ein derartiges Ventil ist aus der DE-A-2 048 525 bekannt.

Solche als Grundplatten-Ventile bezeichneten Wegeventile sind weit verbreitet. Bei bekannten Wegeventilen dieser Art ist jedem einzelnen Ventilkörper ein Grundplattenelement zugeordnet. Die Grundplattenelemente sind dabei in bekannten Ausführungen mit den entsprechenden Druckmittelkanälen versehen und haben an der Oberfläche, die mit dem Wegeventil in Kontakt zu bringen ist, entsprechende Anschlüsse. Die Grundplattenelemente selbst können bei bekannten Anordnungen in beliebiger Weise aneinandergereiht werden. Werden diese Grundplattenelemente mit Ventilen bestückt, so entsteht beispielsweise eine aus mehreren Ventilen bestehende Ventilgruppe. Die Führung von Druckmittelanschlüssen innerhalb der Grundplattenelemente ist bei Ventilen dieser Art genormt. Es gibt dabei Ausführungen, bei denen die Grundplatten lediglich die Druckmittelanschlüsse S, P und R aufweisen. P stellt den Druckmittelversorgungsanschluß dar, und R und S sind Entlüftungsanschlüsse. Bei Inline-Ventilen auf sogenannten Anschlußplatten werden die Arbeitsleitungen A und B direkt aus den Ventilen herausgeführt. Bei sogenannten Inline-Ventilen ohne Anschlußplatte werden sämtliche Druckmittelanschlüsse bzw. Druckmittelleitungen einzeln, d.h. ohne Grundplatte, geführt. Bei den zuerst benannten klassischen Grundplattenventilen sind neben den genannten Anschlüssen 5, P und R auch die Arbeitsleitungen A und B durch das Grundplattenelement geführt. Der Vorteil von Inline-Ventilen, die auf Grundplatten verzichten, ist es, daß durch die direkte Herausführung der Arbeitsleitungen ein hoher Druckmitteldurchflußwert erreicht wird. Bei Grundplattenventilen hingegen sind sämtliche Druckmittelanschlüsse über eine Seitenfläche des Ventilkörpers nach außen geführt. Das Grundplattenelement weist die entsprechenden Druckmittelanschlüsse ebenfalls an einer, nämlich an der mit dem Ventil in Kontakt zu bringenden Außenfläche auf. Dies führt dazu, daß die Druckmittelanschlüsse, insbesondere die Arbeitskanäle, innerhalb des Grundplattenelementes entsprechend stark umgelenkt sind. Solche starken Umlenkungen behindern den Durchfluß von Druckmittel in erheblichem Maße. Bislang ist es nicht gelungen, die geradlinige Führung der Druckmittelleitungen, wie sie bei Inline-Ventilen vorliegt, auch für Grundplattenventile zu realisieren, bei denen sämtliche Kanäle innerhalb der Grundplattenelemente geführt werden.

Mit der vorliegenden Erfindung hat man sich diesem Problem gewidmet und ein Wegeventil in Grundplattenausführung derart ausgestaltet, daß eine geradlinige Führung der über das Ventilglied schaltbaren Druckmittelanschlüsse realisiert ist. In der Lösung des vorstehend genannten Problemes ist bei einem Wegeventil der gattungsgemäßen Art erfindungsgemäß vorgeschlagen, daß das Grundplattenelement eine Ausnehmung aufweist, in welche der Ventilkörper zumindest teilweise einschiebbar ist und die in Kontakt zu bringenden Druckmittelanschlüsse an ebenen Flächen innerhalb der in Durchflußrichtung einander gegenüberliegen und am entsprechenden Abschnitt des Ventilkörpers derart angeordnet sind, daß sie einander fluchtend zur Anlage kommen.

Weitere Ausgestaltungen der Erfindung sind in den Unteransprüchen angegeben. Durch eine solche erfindungsgemäße Ventilgestaltung ist es nun möglich, daß auf der einen Seite, d.h. an einer der Flächen der im Tiefenprofil beispielsweise keilförmigen Ausnehmung die genormten Druckmittelanschlüsse S, P und R an den Ventilkörper herangeführt werden, und an der gegenüberliegenden Fläche ohne Umlenkung des Druckmittelflusses die Arbeitsleitungen aus dem Ventilkörper austreten und geradlinig in die entsprechende Fläche des Grundplattenelementes eintreten. Somit ergibt sich, daß die Leitungen 5, P, R und A, B quasi parallel zueinander angeordnet sind und die Druckanschlüsse sich quasi gegenüberliegen. Es findet somit eine erheblich geradlinigere Durcnströmung des Ventiles statt. Hiermit können unter Ausnutzung des Vorteiles, daß sämtliche Druckmittelanschlüsse innerhalb des Grundplattenelementes geführt sind, hohe Durchflußwerte erreicht werden, wie sie ansonsten nur von grundplattenlosen Inline-Ventilen erreicht werden. In weiterer Ausgestaltung der Erfindung ist der in die Ausnehmung des Grundplattenelementes einzubringende Teil des Ventilkörpers sowie die Ausnehmung selbst keilförmig ausgebildet. Dies ist in der Weise vorgenommen, daß sich die keilförmige Ausnehmung zum offenen Ende hin erweitert und zum Boden der Ausnehmung des Grundplattenelementes hin verjüngt. Eine solche Ausbildung hat darüber hinaus erhebliche dichtungsmäßige Vorteile. Durch die keilförmige Ausbildung des Ventilkörperabschnittes sowie der Ausnehmung im Grundplattenelement wird während des Einschiebens des Ventilkörpers in die Ausnehmung nicht nur der Ventilkörper mit dem entsprechend keilförmigen Teil in die Ausnehmung hineingesenkt, sondern die in Kontakt zu bringenden Flächen nähern sich während dieser Einschiebbewegung an, bis hin zu einer dichtenden Anpressung der Dichtelemente. In weiterer vorteilhafter Ausgestaltung sind Ventilkörper und Ventilgrundplattenelemente mit Rastelementen versehen, die den Ventilkörper in eingeschobener Position in Funktionslage arretiert halten.

Die Erfindung ist in der Zeichnung dargestellt und im nachfolgenden näher beschrieben. Es zeigt:
- Fig. 1: Ventil in demontierter Lage,
- Fig. 2: Schnitt durch Ventil in montierter Funktionslage.

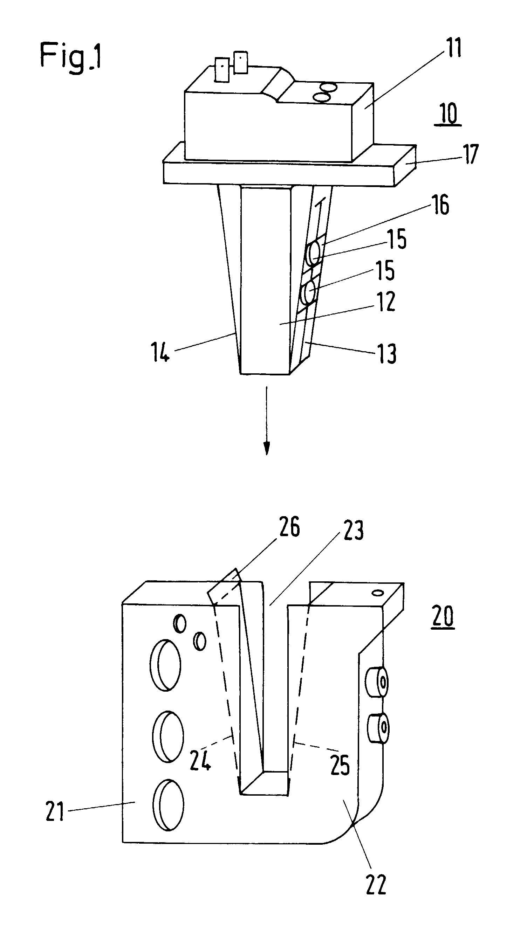

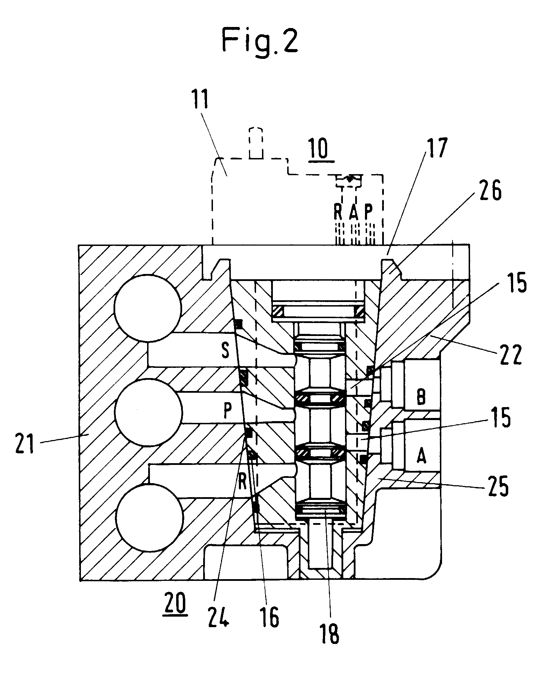

Fig. 1 zeigt das Wegeventil in Grundplattenausführung in demontierter Stellung. Ein Ventilkörper 10 selbst weist einen elektromagnetischen Ventilantrieb 11 auf, sowie einen keilförmigen Abschnitt 12. Innerhalb des keilförmigen Abschnittes 12 ist das verschiebbare Ventilglied 18 angeordnet sowie Austrittsöffnungen der zu schaltenden Druckmittelanschlüsse. An abgeschrägten Flächen 13, 14 dieses keilförmigen Abschnitts 12 treten entsprechende öffnungen 15 über die Fläche 13, 14 aus. Im Bereich dieser öffnungen 15 sind Dichtungselemente 16 angeordnet, die hierbei über die ansonsten ebene Fläche hinausragen und bei Erreichen der Montagestellung innerhalb einer Ausnehmung 23 eines Grundplattenelementes 20 an die abzudichtenden Stellen angepreßt werden. Zwischen dem Ventilantrieb 11 und dem keilförmigen Abschnitt 12 ist eine Platte 17 angeordnet, die mit dem Grundplattenelement 20 in montierter Stellung zur Anlage kommt und darüber hinaus noch entsprechende Rastelemte 26 enthält, die mit dem Grundplattenelement 20 in montierter Funktionslage zusammenwirken und den Ventilkörper 10 in dem Grundplattenelement 20 fixieren. Im unteren Bildteil von Fig. 1 ist das Grundplattenelement 20 dargestellt. Die Ausnehmung (23) ist entsprechend dem keilförmigen Abschnitt 12 des Ventilkörpers 10 entsprechend keilförmig ausgebildet. An ihren Flächen 24, 25 treten die entsprechenden Druckmittelanschlüsse aus, die in Fig. 2 noch näher dargestellt sind. Diejenige Außenwandung der Ausnehmung (23), die hier nicht keilförmig ist, ist in Einschiebrichtung bis zum Grund der Ausnehmung (23) hin durchbrochen, so daß das Grundplattenelement in der Seitenansicht U-förmig erscheint. Hierbei ist bereits dargestellt, daß die genormten Druckmittelanschlüsse S, P, R auf einer Seite, d.h. hierbei im Bereich eines linken Schenkels 21, und die Arbeitsanschlüsse A und B innerhalb eines rechten Schenkels 22 des Grundplattenelementes angeordnet sind. Zwischen diesen Anschlüssen ist somit der Ventilkörper 10 in montierter Funktionslage angeordnet. Dies erlaubt, was hierbei schon zu erkennen ist, eine sehr geradlinige Durchströmung des Grundplattenelementes 20.

Fig. 2 zeigt einen Schnitt durch ein erfindungsgemäßes Wegeventil in montierter Funktionslage. Hierbei ist nun auch die innere Gestaltung des Ventilkörpers 10 sowie des Grundplattenelementes 20 zu erkennen. Innerhalb des Ventilkörpers 10 ist das über den externen Antrieb antreibbare Ventilglied 18 angeordnet, welches zwischen den einzelnen Druckmittelanschlüssen S, P, R, A, B schaltet. Dieses Ventilglied 18 kann entweder selbst auch druckmittelbeaufschlagt über einen Kolbenantrieb angetrieben sein, oder aber auch elektromotorisch oder elektromagnetisch. Zu erkennen ist die Kanalführung innerhalb des Grundplattenelementes 20. Wie bereits in der Beschreibung zu Fig. 1 gesagt, sind innerhalb des einen Schenkels 21 des Grundplattenelementes 20 die Standardanschlüsse S, P und R angeordnet, und innerhalb des anderen Schenkels 22 des Grundplattenelementes 20 sind die Arbeitsanschlüsse B und A angeordnet. Zu erkennen ist hierbei, daß durch diese Anordnung eine geradlinige Durchströmung des Ventiles möglich ist und somit ein Ventil mit hohem Durchflußwert geschaffen ist, welches im Gegensatz zu sogenannten Inline-Ventilen insgesamt vom Vorteil der Grundplattenelemente Gebrauch macht.

## Patentansprüche

1. Wegeventil in Grundplattenausführung mit einem Ventilkörper (10), in welchem mindestens ein zwischen Druckmittelanschlüssen schaltbares Ventilglied angeordnet ist, sowie mit einem Druckmittelleitungen enthaltenden Grundplattenelement (20), mit welchem der Ventilkörper (10) mindestens mit einem Teil seiner Druckmittelanschlüsse in druckmittelschlüssigen Kontakt bringbar ist,
dadurch gekennzeichnet,
daß das Grundplattenelement (20) eine Ausnehmung (23) aufweist, in welche der Ventilkörper (10) zumindest teilweise einschiebbar ist und die in Kontakt zu bringenden Druckmittelanschlüsse (S, P, R, A, B) an ebenen Flächen (24, 25) innerhalb der Ausnehmung (23) in Durchflußrichtunageinander gegenüberliegen und ebenso am entsprechenden Abschnitt (12) des Ventilkörpers (10) derart angeordnet sind, daß sie einander fluchtend zur Anlage kommen.

2. Wegeventil in Grundplattenausführung nach Anspruch 1,
dadurch gekennzeichnet,
daß der in die Ausnehmung (23) des Grundplattenelementes (20) einzuschiebende Abschnitt (12) des Ventilkörpers (10) keilförmig ausgeführt ist, und die Ausnehmung (23) zur Aufnahme desselben entsprechend keilförmig ausgebildet ist.

3. Wegeventil in Grundplattenausführung nach Anspruch 2,
dadurch gekennzeichnet,
daß an den schrägen Flächen (13, 14) des keilförmigen Abschnitts (12) die Druckmittelanschlüsse (15) des Ventilkörpers (10), und an den entsprechenden schrägen Flächen (24, 25) der Ausnehmung (23) des Grundplattenelementes (20) die Druckmittelanschlüsse desselben angeordnet sind.

4. Wegeventil in Grundplattenausführung nach Anspruch 3,
dadurch gekennzeichnet,
daß Dichtungselemente (16) an den Druckmittelanschlüssen (15) des Ventilkörpers (10) oder des Grundplattenelementes (20) derart angeordnet sind, daß sie über die zueinander zu bringenden Flächen (13, 14, 24, 25) hinausragen und bei Erreichen der Soll-Lage des keilförmigen Abschnitts (12) in der keilförmigen Ausnehmung (23) dichtend zwischen den Flächen (13, 14, 24, 25) anliegen.

5. Wegeventil in Grundplattenausführung nach Anspruch 4,
dadurch gekennzeichnet,
daß der Ventilkörper (10) und das Grundplattenelement (20) mit Rastelementen (26) versehen sind, welche den Ventilkörper (10) auf bzw. in dem Grundplattenelement (20) in funktionsgerechter Endmontagestellung fixieren.

6. Wegeventil in Grundplattenausführung nach Anspruch 5,
dadurch gekennzeichnet,
daß die Rastelemente (26) von außen zur Lösung der Rastverbindung zugänglich gestaltet sind.

7. Wegeventil in Grundplattenausführung nach einem oder mehreren der Ansprüche 2 bis 6,
dadurch gekennzeichnet,
daß die Seitenwandungen des Grundplattenelementes (20) im Bereich der Ausnehmung (23), die nicht die Flächen (24, 25) der keilförmigen Tiefenkontur der Ausnehmung (23) bilden, durchbrochen sind bis zum Boden der Ausnehmung (23) derart, daß das Grundplattenelement (20) in Seitenansicht eine U-Form bildet.

## Claims

1. A directional valve in a baseplate construction, having a valve body (10) in which at least one valve member which can be inserted between pressure-medium connections is located, and also with a baseplate element (20) containing pressure-medium connections, with which the valve body (10) can be brought into pressure-medium contact at least with some of its pressure-medium connections, characterised in that the baseplate element (20) has a recess (23) into which the valve body (10) can be at least partially inserted and the pressure-medium connections (S, P, R, A, B) which are to be brought into contact are located opposite one another on flat surfaces (24, 25) within the recess (23) in the direction of throughflow and likewise are arranged on the corresponding section (12) of the valve body (10) such that they come to lie flush against one another.

2. A directional valve in a baseplate construction according to Claim 1, characterised in that the section (12) of the valve body (10) to be inserted into the recess (23) in the baseplate element (20) is wedge-shaped and the recess (23) is correspondingly wedge-shaped to receive it.

3. A directional valve in a baseplate construction according to Claim 2, characterised in that the pressure-medium connections (15) of the valve body (10) are arranged on the inclined surfaces (13, 14) of the wedge-shaped section (12), and the pressure-medium connections thereof are arranged on the corresponding inclined surfaces (24, 25) of the recess (23) in the baseplate element (20).

4. A directional valve in a baseplate construction according to Claim 3, characterised in that sealing elements (16) are arranged on the pressure-medium connections (15) of the valve body (10) or of the baseplate element (20) such that they project beyond the surfaces (13, 14, 24, 25) which are to be brought together and lie in sealing fashion between the surfaces (13, 14, 24, 25) upon reaching the desired position of the wedge-shaped section (12) in the wedge-shaped recess (23).

5. A directional valve in a baseplate construction according to Claim 4, characterised in that the valve body (10) and the baseplate element (20) are provided with catch elements (26) which fix the valve body (10) on or in the baseplate element (20) in a final assembled position suitable for operation.

6. A directional valve in a baseplate construction according to Claim 5, characterised in that the catch elements (26) are designed to be accessible from the outside in order to release the catch connection.

7. A directional valve in a baseplate construction according to one or more of Claims 2 to 6, characterised in that the side walls of the baseplate element (20) which do not form the surfaces (24, 25) of the wedge-shaped depth contour of the recess (23) are apertured as far as the bottom of the recess (23) in the region of the recess (23), such that the baseplate element (20) is U-shaped when viewed from the side.

## Revendications

1. Distributeur à plaque de base, comportant un corps de distributeur (10), dans lequel est agencé au moins un organe de distributeur commandant l'utilisation de raccords de fluide de pression, et un élément formant plaque de base (20), qui contient des raccords de fluide de pression et avec lequel le corps de distributeur (10) avec au moins une partie de ses raccords de fluide de pression peut être amené en contact pour fluide de pression, caractérisé en ce que
l'élément formant plaque de base (20) comporte un évidement (23) dans lequel le corps de distributeur (10) peut être introduit au moins partiellement et les raccords de fluide de pression (S, P, R, A, B) à amener en contact se trouvent en face les uns des autres dans la direction de passage du flux sur des surfaces planes (24, 25) à l'intérieur de l'évidement (23) et sont agencés de même sur le tronçon correspondant (12) du corps de distributeur (10) de telle sorte qu'ils viennent se placer alignés les uns par rapport aux autres.

2. Distributeur à plaque de base selon la revendication 1,
caractérisé en ce que
le tronçon (12) du corps de distributeur (10) qui doit être introduit dans l'évidement (23) de l'élément formant plaque de base (20) est construit en forme de coin et l'évidement (23) est construit de même en forme de coin pour loger ce tronçon (12).

3. Distributeur à plaque de base selon la revendication 2,
caractérisé en ce que
les raccords de fluide de pression (15) du corps de distributeur (10) sont agencés sur les surfaces inclinées (13, 14) du tronçon (12) en forme de coin et les raccords de fluide de pression de l'élément formant plaque de base (20) sont agencés sur les surfaces inclinées correspondantes (24, 25) de l'évidement (23) de cet élément formant plaque de base (20).

4. Distributeur à plaque de base selon la revendication 3,
caractérisé en ce que
des éléments d'étanchéité (16) sont agencés sur les raccords de fluide de pression (15) du corps de distributeur (10) ou de l'élément formant plaque de base (20) de telle sorte qu'ils dépassent des surfaces (13, 14, 24, 25) à amener les unes contre les autres et qu'ils se trouvent formant étanchéité entre les surfaces (13, 14, 24, 25) lorsque le tronçon (12) en forme de coin a atteint sa position de consigne dans l'évidement (23) en forme de coin.

5. Distributeur à plaque de base selon la revendication 4,
caractérisé en ce que
le corps de distributeur (10) et l'élément formant plaque de base (20) sont munis d'éléments à crans (26) qui fixent le corps de distributeur (10) sur et dans l'élément formant plaque de base (20) dans sa position de montage définitif correcte pour le fonctionnement.

6. Distributeur à plaque de base selon la revendication 5,
caractérisé en ce que
les éléments à crans (26) sont conçus accessibles de l'extérieur afin de pouvoir défaire l'assemblage assuré par ces éléments à crans.

7. Distributeur à plaque de base selon une ou plusieurs des revendications 2 à 6,
caractérisé en ce que
celles des parois latérales de l'élément formant plaque de base (20) dans la zone de l'évidement (23) qui ne forment pas les surfaces (24, 25) du contour en profondeur en forme de coin de l'évidement (23) sont coupées jusqu'au fond de l'évidement (23) de telle sorte que l'élément formant plaque de base (20) a une forme de U en vue de côté.
